# EUROPEAN PATENT APPLICATION

(11) **EP 4 769 808 A1**
(43) Date of publication of application: **01.07.2026**
(21) Application number: 25861723.2
(22) Date of filing: 05.02.2025
(51) Int. Cl.: H01M 50/528

(54) **PIN MEMBER AND BATTERY**

(30) Priority: 24.10.2024 CN 202422581714 U
(71) Applicant: HUIZHOU EVE POWER CO., LTD, Huizhou, Guangdong 516039 (CN); Eve Power Co., Ltd., Jingmen, Hubei 448000 (CN)
(72) Inventor: Wei, Chenyang, Huizhou, Guangdong 516039 (CN); Shu, Kuanjin, Huizhou, Guangdong 516039 (CN); An, Suli, Huizhou, Guangdong 516039 (CN)
(74) Representative: Zhu, Puxing
(86) International application number: PCT/CN2025/075727
(87) International publication number: WO 2026/086042

(57) **Abstract**

The present application provides a pin component and a battery cell. The pin component includes a tab connection section, a transition section, and a pole connection section. The transition section is connected to the tab connection section in a bending manner, and a first included angle is formed between the transition section and the tab connection section. The pole connection section and the transition section are connected in a bending manner, and a part of the pole connection section overlaps with the transition section.

## Description

This application claims priority to Chinese Patent Application No. 202422581714.8 filed on October 24, 2024, the entire contents of which are incorporated herein by reference.

### TECHNICAL FIELD

The present application relates to the technical field of batteries, and particularly relates to a pin component and a battery cell.

### BACKGROUND

In related arts, a pole and a tab of a core package are electrically connected by a pin component. Generally, a shape of the pin component is complex, so that the pin component has higher compatibility in space, and it is convenient for the pin component to connect the pole and the tab at different positions in space, thereby realizing the electrical connection between the tab and the pole.

### SUMMARY

However, during use of the pin component having this structure, the pin component is prone to cracking at a position with concentrated bending stress.

Embodiments of the present application provide a pin component and a battery cell. The pin component includes a tab connection section, a transition section, and a pole connection section. The transition section is connected to the tab connection section in a bending manner, and a first included angle is formed between the transition section and the tab connection section. The pole connection section and the transition section are connected in a bending manner, and a part of the pole connection section overlaps with the transition section.

In some embodiments, an orthographic projection of the transition section falls completely into an orthographic projection of the pole connection section on a same projection plane perpendicular to a thickness direction of the pole connection section.

In some embodiments, an included angle between an extension direction of the pole connection section and a thickness direction of the tab connection section is in a range of 87° to 90°.

In some embodiments, the extension direction of the pole connection section is perpendicular to the thickness direction of the tab connection section.

In some embodiments, a first crease is formed between the transition section and the pole connection section, and a second included angle is formed between an extension direction of the first crease and the extension direction of the pole connection section.

In some embodiments, the second included angle is in a range of 40° to 50°.

In some embodiments, the pole connection section is located on a side of the transition section facing the tab connection section.

In some embodiments, the pole connection section includes a first segment and a second segment, the first segment is connected to the transition section in a bending manner and overlaps with the transition section. The second segment is connected to the first segment and is located at a different height position from the first segment along a thickness direction of the pole connection section to define a first avoidance groove, and an opening of the first avoidance groove faces a side of the pole connection section away from the transition section.

In some embodiments, the second segment is provided with a pole mounting hole that penetrates the second segment along the thickness direction of the pole connection section.

In some embodiments, the transition section includes a first surface away from the first segment, the second segment includes a second surface away from the first avoidance groove, and the second surface is flush with the first surface.

In some embodiments, the tab connection section includes a first straight segment, a second straight segment, and a connecting segment. The first straight segment is connected to the transition section in a bending manner, the connecting segment is connected to an end of the first straight segment away from the transition section, and the second straight segment is connected to an end of the connecting segment away from the first straight segment. The connecting segment is disposed opposite to the transition section, and the transition section, the first straight segment, and the connecting segment define a second avoidance groove.

In some embodiments, the first included angle is in a range of 87° to 92°.

In a second aspect, embodiments of the present application also provide a battery cell, the battery cell includes the pin component of any of the above embodiments.

### BENEFICIAL EFFECTS

In the embodiments of the present application, by overlapping a part of the pole connection section with the transition section, material accumulates at an overlapping position. When the pin component is subjected to a pulling force, the transition section and the pole connection section can constrain each other, preventing the pole connection section and the tab connection section from being away from each other. When the pin component is subjected to a squeezing force, the transition section and the pole connection section can support each other, and a bent position between the transition section and the pole connection section is less prone to fatigue, thereby reducing the risk of the pin component cracking at a position with concentrated bending stress.

### BRIEF DESCRIPTION OF DRAWINGS

FIG. 1 is a perspective view of a pin component provided by embodiments of the present application.
FIG. 2 is a front view of the pin component shown in FIG. 1.
FIG. 3 is a left side view of the pin component shown in FIG. 1.
FIG. 4 is a top view of the pin component shown in FIG. 1.
FIG. 5 is a schematic structural diagram of a pin component according to other embodiments of the present application.
FIG. 6 is a schematic structural diagram of a pin component according to yet other embodiments of the present application.
FIG. 7 is an exposed schematic view of a battery cell provided by embodiments of the present application.
FIG. 8 is a schematic structural view of a battery cell removed a shell provided by embodiments of the present application.
FIG. 9 is an enlarged view of portion A in FIG. 8.
FIG. 10 is a left side view of the battery cell shown in FIG. 8.
FIG. 11 is a flowchart of a method for preparing a pin component according to embodiments of the present application.
FIG. 12 is a schematic structural diagram of a metal member provided by embodiments of the present application.
FIG. 13 is a schematic diagram of the metal member shown in FIG. 8 being bent once.
FIG. 14 is a schematic view of a metal member shown in FIG. 9 being subjected to another bending.
FIG. 15 is a schematic structural diagram of a metal member provided by other embodiments of the present application.
FIG. 16 is a schematic structural diagram of a metal member provided by yet other embodiments of the present application.

Reference numerals:

100, battery cell; 11, end cap; 12, pole; 13, pin component; 131, tab connection section; 1311, first straight segment; 1312, second straight segment; 1313, connecting segment; 1314, second avoidance groove; 132, transition section; 1321, first surface; 133, pole connection section; 1331, first segment; 1332, second segment; 13321, pole mounting hole; 13322, second surface; 1333, first avoidance groove; 134, first crease; 135, second crease; 20, core package; 21, body portion; 22, tab; 221, flat section; 222, bending section; 30, shell; 1, first process notch; 2, second process notch; Z, thickness direction of pole connection section; X, extension direction of pole connection section; Y, thickness direction of tab connection section.

### DETAILED DESCRIPTION

The following will provide a clear and complete description of technical solutions in embodiments of the disclosure in combination with the drawings. Apparently, the described embodiments are only some embodiments of the disclosure, not all of them. Based on the embodiments of the present application, all other embodiments obtained by those skilled in the art without creative work fall within the protection scope of the present application. In addition, it should be understood that the specific embodiments described herein are only for the purpose of illustrating and explaining the present application and are not intended to limit the present application. In the present application, unless otherwise specified, orientational terms used such as "upper" and "lower" usually refer to upper and lower positions of a device in actual use or working state, and specifically orientations in the drawings, while the terms "inside" and "outside" refer to a position relative to an outline of the device.

In the description of the specification, the terms "an embodiment", "some embodiments", "exemplarily", "example", or "some examples" are intended to indicate that specific features, structures, materials, or characteristics associated with that embodiment or example are included in at least one embodiment or example of the present application. The schematic representation of the above terms does not necessarily refer to the same embodiment or example. Furthermore, the specific features, structures, materials, or characteristics described may be included in any one or more embodiments or examples in any suitable manner.

In addition, the terms "first" and "second" are only used for descriptive purposes and cannot be understood as indicating or implying relative importance or implying the number of technical features indicated. Thus, a feature defined as "first" or "second" may explicitly or implicitly include one or more of the features. In the description of the embodiments of the present application, unless otherwise specified, "plurality of" means two or more.

A pin component has an important influence on the battery cell, and the cracking of the pin component causes a decrease in strength and may affect the current flow of the battery cell.

In related arts, a pole and a tab of a core package are electrically connected by the pin component. Generally, a shape of the pin component is complex, so that the pin component has higher compatibility in space, and it is convenient for the pin component to connect the pole and the tab at different positions in space, thereby realizing the electrical connection between the tab and the pole. Both ends of this pin component are connected to the pole and the tab, respectively, but a middle portion of the pin component lacks support or restraint, causing the pin component having this structure to easily crack at a position with concentrated bending stress in use. In particular, the middle portion of the pin component has low strength, and the low strength exacerbates stress concentration at a bent position and cause fracture during use.

In view of this, the embodiments of the present application provide a pin component 13. The pin component 13 may be a positive pin component for realizing an electrical connection between a positive pole and a positive tab, or may be a negative pin component for realizing an electrical connection between a negative pole and a negative tab. A material of the pin component 13 may be various. For example, the material of the pin component 13 includes, but is not limited to, copper, nickel, steel, or alloys thereof, or the like. A specific structure of the pin component 13 will be described in detail below with reference to the accompanying drawings.

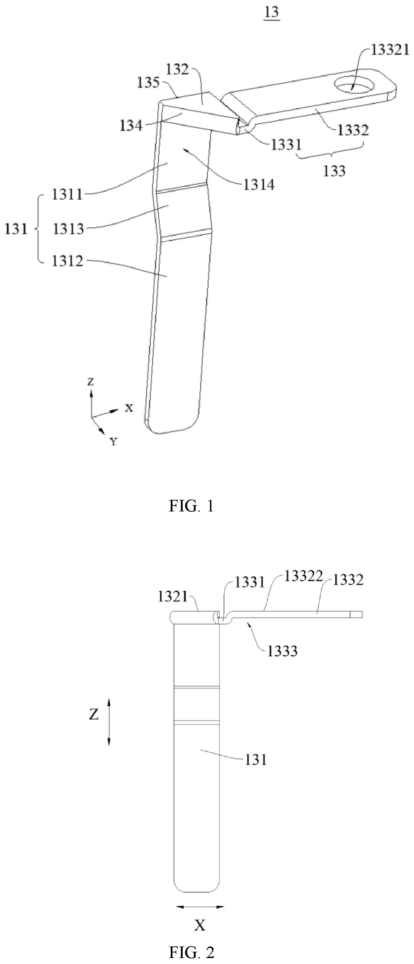

Referring to FIG. 1 to FIG. 4, the pin component 13 includes a tab connection section 131, a transition section 132, and a pole connection section 133 connected in this order.

The transition section 132 and the tab connection section 131 are connected in a bending manner, and a first included angle α1 is formed between the transition section 132 and the tab connection section 131. The pole connection section 133 and the transition section 132 are connected in a bending manner, and a part of the pole connection section 133 overlaps with the transition section 132.

It can be understood that the pin component 13 has two bent positions, one bent position between the pole connection section 133 and the transition section 132 forms a first crease 134, and another bent position between the transition section 132 and the tab connection section 131 forms a second crease 135.

In the embodiments, by overlapping the part of the pole connection section 133 with the transition section 132, material accumulates at an overlapping position. When the pin component 13 is subjected to a pulling force, the transition section 132 and the pole connection section 133 can constrain each other, preventing the pole connection section 133 and the tab connection section 131 from being away from each other. When the pin component 13 is subjected to a squeezing force, the transition section 132 and the pole connection section 133 can support each other, and a bent position between the transition section 132 and the pole connection section 133 is less prone to fatigue, thereby reducing the risk of the pin component 13 cracking at a position with concentrated bending stress.

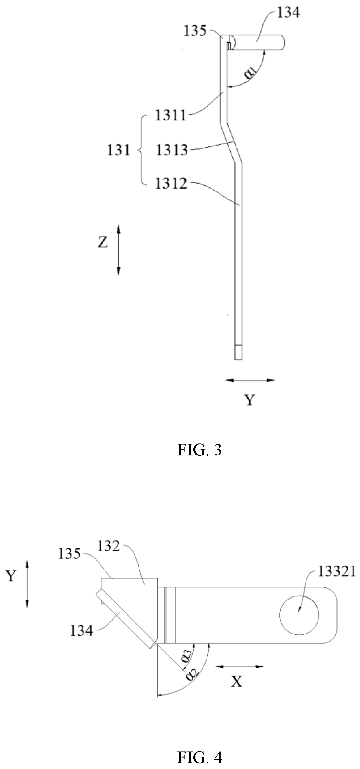

Referring to FIG. 3, in some possible implementations, the first included angle α1 is in a range of 87° to 92°. It should be understood that the smaller the first included angle α1, the larger the bending amplitude between the tab connecting segment 131 and the transition section 132; and the larger the first included angle, the smaller the bending amplitude between the tab connecting segment 131 and the transition section 132. Under the condition that the bending amplitude between the tab connection section 131 and the transition section 132 is too large, the more serious the material deformation at the bent position is, and the bent position is likely to be cracked or broken. Under the condition that the bending amplitude between the tab connection section 131 and the transition section 132 is too small, the pin component 13 is likely to be plastically deformed when stressed, and the bearing capacity and stiffness are weakened. Therefore, on the condition that a range of the first included angle is from 87° to 92°, the pin component 13 is less likely to be cracked or broken, and the pin component 13 has high bearing capacity and stiffness. At the same time, the risk of interference of the tab connection section 131 with other components in its thickness direction during use can be greatly reduced.

Exemplarily, the first included angle may be 87°, 87.5°, 88°, 88.5°, 90°, 91°, 91.5°, 92°, any numerical value therebetween, or the like.

Optionally, the first included angle is 90°, in other words, a thickness direction Z of the pole connection section is perpendicular to a thickness direction of the transition section 132.

In some possible implementations, on the same projection plane perpendicular to the thickness direction Z of the pole connection section, an orthographic projection of the transition section 132 falls completely into an orthographic projection of the pole connection section 133. In this way, the transition section 132 can overlap the pole connection section 133 to a greater extent.

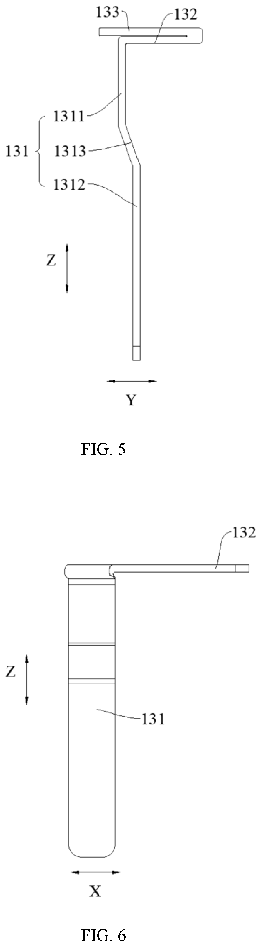

The pole connection section 133 may extend in a thickness direction Y of the tab connection section (as shown in FIG. 5), and the pole connection section 133 may extend in a width direction of the tab connection section 131 (as shown in FIG. 1 to FIG. 4). Different from the possible implementations shown in FIG. 5, in the possible implementations shown in FIG. 1 to FIG. 4, the pole connection section 133 extends substantially along the width direction of the tab connection section 131, so that the pole connection section 133 can be located on a lateral side of the tab connection section 131 to a large extent, and the pole connection section 133 is conveniently connected to the pole 12 on the lateral side of the tab connection section 131.

Referring to FIG. 4, in some possible implementations, an included angle α2 between an extension direction X of the pole connection section and the thickness direction Y of the tab connection section is in a range of 87° to 90°. With this arrangement, the pole connection section 133 can be bent to a lateral side in the width direction of the tab connection section 131 to a large extent, so that the pole connection section 133 and the pole (mentioned later) are conveniently connected. Further, under the condition that the pole connection section 133 is located on a side of the transition section 132 facing the tab connection section 131, the pole connection section 133 is less likely to interfere with the tab connection section 131 when the pole connection section 133 is bent.

Exemplarily, the included angle between the extension direction X of the pole connection section and the thickness direction Y of the tab connection section may be 87°, 87.2°, 87.5°, 88°, 88.2°, 88.5°, 88.7°, 90°, any numerical value therebetween, or the like.

In some possible implementations, the extension direction X of the pole connection section is perpendicular to the thickness direction Y of the tab connection section. In other words, the included angle between the extension direction X of the pole connection section and the thickness direction Y of the tab connection section is 90°.

In some possible implementations, any two of the thickness direction Y of the tab connection section, the thickness direction Z of the pole connection section, and the extension direction X of the pole connection section are perpendicular to each other.

With continued reference to FIG. 4, in some possible implementations, a second included angle α3 is formed between an extension direction of the first crease 134 and the extension direction X of the pole connection section. The second included angle may also be understood as an inclination included angle of the first crease 134 with respect to the pole connection section 133. It can be understood that the first crease 134 is disposed obliquely with respect to the extension direction X of the pole connection section. With this arrangement, it is convenient to form the pin component 13 by bending a straight strip-shaped metal member. Compared with a L-shaped plate-shaped metal member, the straight strip-shaped metal member may have smaller corners or no corners, which can alleviate the cracking of the metal member during bending of the metal member or the cracking of the pin component 13 during use.

In some possible implementations, the second included angle is in a range of 40° to 50°. Under the condition that the second included angle is less than 50°, the inclination included angle of the first crease 134 with respect to the pole connection section 133 is not too large, and the pole connection section 133 is not easy to interfere with the tab connection section 131. Under the condition that the second included angle is greater than 40°, the setting facilitates the extension of the pole connection section 133 in the width direction of the tab connection section 131 to a large extent, and facilitates the connection between the pole connection section 133 and the pole 12.

Exemplarily, the second included angle may be 40°, 41°, 42°, 43°, 44°, 45°, 46°, 47°, 48°, 49°, 50°, and any numerical value therebetween.

With respect to the transition section 132, the pole connection section 133 may be located on a side of the transition section 132 away from the tab connection section 131 (as shown in FIG. 6), and the pole connection section 133 may also be located on a side of the transition section 132 facing the tab connection section 131 (as shown in FIG. 1 to FIG. 4). Compared with the possible implementations shown in FIG. 6, in the possible implementations shown in FIG. 1 to FIG. 4, the pole connection section 133 is located on the side of the transition section 132 facing the tab connection section 131, so that the pole connection section 133 does not occupy additional space in the direction Z, allowing the pin component 13 having a smaller dimension in the direction Z to be obtained.

In some possible implementations, the pole connection section 133 is located on the side of the transition section 132 facing the tab connection section 131, and the first included angle α1 is in a range of 87° to 92°. Since the range of the first included angle α1 is from 87° to 92°, the risk of interference between the pole connection section 133 and the tab connection section 131 can be greatly reduced.

Referring to FIG. 1 and FIG. 2, in some possible implementations, the pole connection section 133 includes a first segment 1331 and a second segment 1332. The first segment 1331 and the second segment 1332 are arranged along the extension direction X of the pole connection section. The first segment 1331 is connected to the transition section 132 in a bending manner and overlaps with the transition section 132. The second segment 1332 is connected to the first segment 1331, and along the thickness direction Z of the pole connection section, the first segment 1331 and the second segment 1332 are offset. The second segment 1332 and the first segment 1331 are located at different height positions to define a first avoidance groove 1333, and an opening of the first avoidance groove 1333 faces a side of the pole connection section 133 away from the transition section 132.

Since the pole connection section 133 includes the first segment 1331 and the second segment 1332, and the second segment 1332 and the first segment 1331 are located at different height positions along the thickness direction Z of the pole connection section, the first avoidance groove 1333 with a relatively larger opening can be defined, the possibility of interference between the second segment 1332 and the core package 20 can be reduced, and the extrusion applied to the core package 20 by the second segment 1332 can be greatly reduced.

Optionally, the first segment 1331 and the transition section 132 are diagonally bent, so that the first segment 1331 overlaps the transition section 132 to a greater extent.

Optionally, the pole connection section 133 is stamped to form the first avoidance groove 1333.

Referring to FIG. 1 and FIG. 4, in some possible implementations, the second segment 1332 is provided with a pole mounting hole 13321, and the pole mounting hole 13321 penetrates the second segment 1332 along the thickness direction Z of the pole connection section. A shape of the pole mounting hole 13321 may be various. For example, the shape of the pole mounting hole 13321 includes, but is not limited to, a circular shape, an elliptical shape, a rectangular shape, a waist shape, or the like.

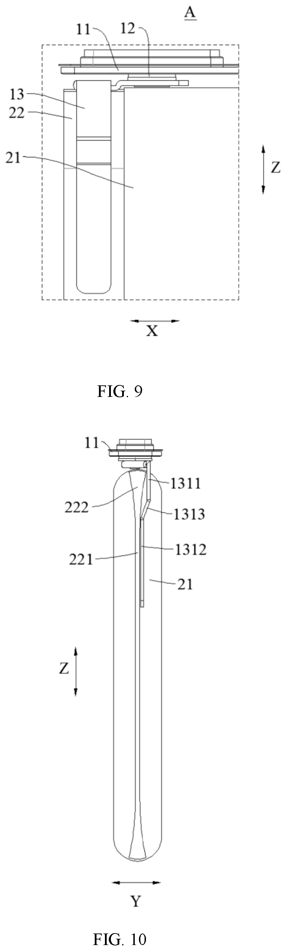

In some possible implementations, in order to improve the connection stability between the pin component 13 and the pole 12, the pole 12 is penetrated through the pole mounting hole 13321, a part of the pole 12 is located on a side of the pole mounting hole 13321 facing the tab connection section 131 (as shown in FIG. 9), and another part of the pole 12 penetrating out of the pole mounting hole 13321 may be located in the first avoidance groove 1333, thereby greatly reducing the risk of interference between the pole 12 and the core package 20.

Referring to FIG. 2, in some possible implementations, the transition section 132 includes a first surface 1321 away from the first segment 1331, and the second segment 1332 includes a second surface 13322 away from the first avoidance groove 1333. The second surface 13322 is flush with the first surface 1321, in other words, the second surface 13322 is coplanar with the first surface 1321.

In this way, the interface consistency of a top of the pin component 13 is improved, which is beneficial to increasing a contact area between the top of the pin component 13 and other components (such as an upper plastic), and improving the assembly stability. Furthermore, the second segment 1332 does not occupy additional space in the height direction, and a height dimension of the pin component 13 is relatively smaller, and the pin component 13 occupies a relatively smaller height when applied in the battery cell 100, which is beneficial to improving a volume energy density of the battery cell 100.

Referring to FIG. 3 and in conjunction with FIG. 10, in some possible implementations, the tab connection section 131 includes a first straight segment 1311, a second straight segment 1312, and a connecting segment 1313 connected in sequence. The first straight segment 1311 is connected to the transition section 132 in a bending manner, the connecting segment 1313 is connected to an end of the first straight segment 1311 away from the transition section 132, and the second straight segment 1312 is connected to an end of the connecting segment 1313 away from the first straight segment 1311. The connecting segment 1313 is disposed opposite to the transition section 132, and the transition section 132, the first straight segment 1311, and the connecting segment 1313 define a second avoidance groove 1314.

**In** the embodiments, the second avoidance groove 1314 can avoid a tab 22 of the core package 20, and reduce the extrusion applied to the tab 22 by the tab connection section 131.

Referring to FIG. 10, under the condition that the core package 20 is a wound electrode assembly and the tab 22 includes a bending section 222, the second avoidance groove 1314 can especially avoid the bending section 222 of the tab 22 and reduce the risk of cracking of the bending section 222 of the tab 22.

The present application also provides a pin component 13. The pin component 13 includes a tab connection section 131, a pole connection section 133, and a transition section 132. The tab connection section 131, the pole connection section 133, and the transition section 132 are integrally formed. The tab connection section 131 is connected to the transition section 132 in a bending manner. The pole 12 transition section 132 is connected to the transition section 132 in a bending manner. An extension direction X of the pole connection section is parallel to a width direction of the tab connection section 131, a thickness direction Z of the pole connection section is perpendicular to a thickness direction Y of the tab connection section, and an extension direction of the tab connection section 131 is parallel to the thickness direction Z of the pole connection section. The transition section 132 overlaps the pole connection section 133, and an included angle between the transition section 132 and the tab connection section 131 is 90°. The tab connection section 131 includes a first straight segment 1311, a connecting segment 1313, and a second straight segment 1312 connected in sequence. The first straight segment 1311 is connected to the transition section 132 in a bending manner. The connecting segment 1313 is connected to an end of the first straight segment 1311 away from the transition section 132, and the second straight segment 1312 is connected to an end of the connecting segment 1313 away from the first straight segment 1311. The connecting segment 1313 is disposed opposite to the transition section 132, and the transition section 132, the first straight segment 1311, and the connecting segment 1313 define a second avoidance groove 1314. The pole connection section 133 includes a first segment 1331 and a second segment 1332 connected to each other. The first segment 1331 and the second segment 1332 are arranged along the extension direction X of the pole connection section. The first segment 1331 is connected to the transition section 132 in a bending manner, and the first segment 1331 and the transition section 132 overlap. The first segment 1331 and the second segment 1332 are arranged at different heights along the thickness direction Z of the pole connection section to define a first avoidance groove 1333, and an opening of the first avoidance groove 1333 faces a side of the tab connection section 131 away from the transition section 132. A width of the first straight segment 1311, a width of the second straight segment 1312, a width of the connecting segment 1313, and a width of the second segment 1332 are equal. The first segment 1331 and the transition section 132 are diagonally bent. On the same projection plane perpendicular to the thickness direction Z of the pole connection section, a projection of the first segment 1331 completely covers a projection of the transition section 132, and the projection of the first segment 1331 is a triangle.

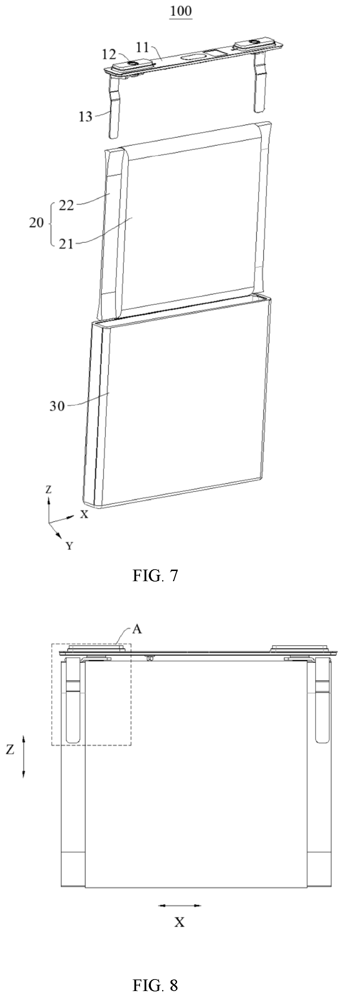

Referring to FIG. 7 to FIG. 10, and in conjunction with FIG. 1 to FIG. 4, embodiments of the present application also provide a battery cell 100. The battery cell 100 includes a shell 30, a core package 20, and an end cap assembly.

The core package 20 is disposed in the shell 30. The core package 20 may be a wound electrode assembly, and the core package 20 may be configured in a flat shape. Specifically, the core package 20 may include a body portion 21 and two tabs 22 having opposite polarities. The tabs 22 may be non-polarity tabs 22. Along an extending direction of a winding axis of the core package 20, the two tabs 22 are provided on both sides of the body portion 21, respectively. The tab 22 may include a flat section 221 and a bending section 222.

The end cap assembly may include an end cap 11, the pin components 13 provided in the above embodiments, and two poles 12 of opposite polarities. The end cap 11 covers an opening of the shell 30, and the end cap 11 and the shell 30 define an accommodation space for accommodating the core package 20. Each of the poles 12 may be attached to the end cap 11 by a rivet block. The pin component 13 serves to realize an electrical connection of the tab 22 and the pole 12 of the same polarity. The pin component 13 electrically connecting the positive tab 22 and the positive pole 12 can be understood as a positive pin component 13, and the pin component 13 electrically connecting the negative tab 22 and the negative pole 12 can be understood as a negative pin component 13.

In some possible implementations, the thickness direction Z of the pole connection section is parallel to a thickness direction of the end cap 11, and the thickness direction Y of the tab connection section is parallel to a thickness direction of the core package 20. The second straight segment 1312 is welded to the flat section 221 of the tab 22, and the opening of the second avoidance groove 1314 faces the bending section 222 of the tab 22, so as to avoid the bending section 222 and reduce the extrusion applied to the bending section 222 by the tab connection section 131. The opening of the first avoidance groove 1333 faces the core package 20, the pole 12 is provided through the pole mounting hole 13321, and a part of the pole 12 is located in the first avoidance groove 1333.

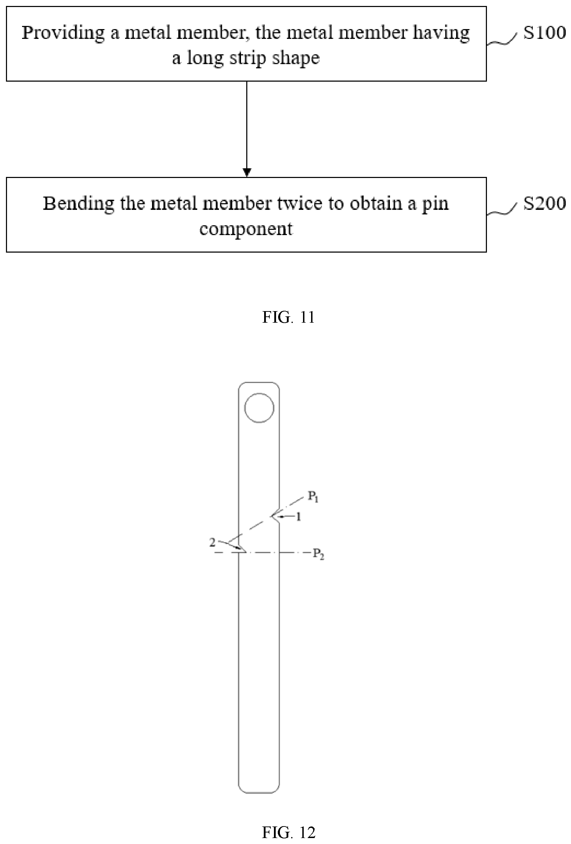

Referring to FIG. 11 to FIG. 14, the present application also provides a method for preparing the pin component 13. The method is configured to prepare the pin component provided in the above embodiments, and the method includes the following steps:
Step S100: Providing a metal member, the metal member having a long strip shape; and
Step S200: Bending the metal member twice to obtain a pin component 13.

The metal member is a metal plate piece with a relatively long length and a relatively narrow width.

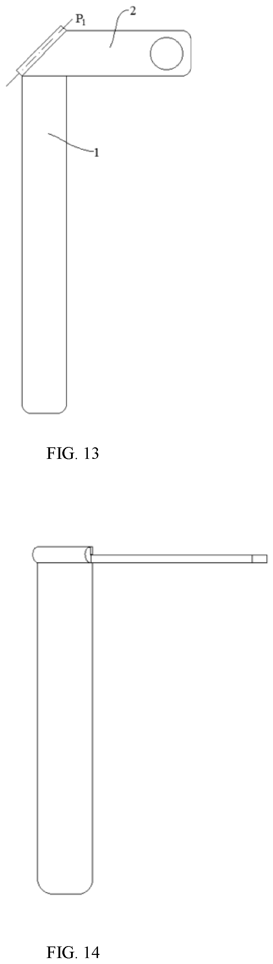

In some possible implementations, referring to FIG. 12, the metal member is first bent obliquely at an angle of 180° along a first preset bending line P1 to obtain the metal member shown in FIG. 13. The first preset bending line P1 is set at an angle of 45° with respect to a width direction of the metal member. The metal member is then bent at an angle of 90° along a second preset bending line P2 to obtain the metal member shown in FIG. 14, and the second preset bending line P2 is parallel to the width direction of the metal member. In this way, the aforementioned pin component 13 is obtained.

On the basis of the possible implementation shown in FIG. 14, the metal member can be bent again to obtain the pin component 13 shown in FIG. 2.

In order to reduce the difficulty of bending the metal member, it is considered that a first process notch 1 and a second process notch 2 are provided on both sides of the metal member in the width direction, respectively, and the first process notch 1 and the second process notch 2 are staggered along a length direction of the metal member. The above method may further include the steps of:
Bending the metal member once along the first process notch 1; and
Bending the metal member once along the second process notch 2.

It should be understood that the first process notch 1 is located in an extending direction of the first preset bending line P1, and the second process notch 2 is located in an extending direction of the second preset bending line P2.

In some possible implementations, referring to FIG. 12, the metal member having a uniform width may be adopted, and two notches may be cut on both sides of the metal member as the first process notch 1 and the second process notch 2, and the two notches may be staggered along the length direction of the metal member. The metal member with the uniform width has high interface consistency and requires less material. In order to reduce the influence of the notches on the structural strength of the pin component 13, after the metal member is bent twice, the notches can be soldered at the positions where the notches are located, and the notches can be filled by melting a material made of the metal member or filled by solder.

In order to reduce the influence of the notches on the strength of the metal member, along the width direction of the metal member, a size of the notch may be in a range of 0.7 mm to 1 mm, and may be, for example, 0.7 mm, 0.72 mm, 0.75 mm, 0.8 mm, 0.85 mm, 0.9 mm, 1 mm, or any value therebetween.

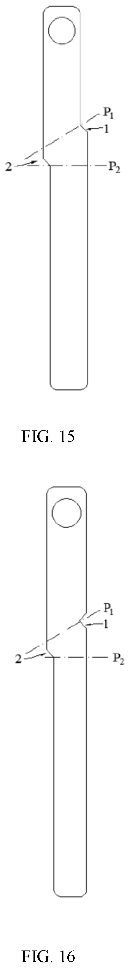

In some possible implementations, referring to FIG. 15, the metal member having varying width may also be adopted, and the first process notch 1 and the second process notch 2 are formed at corner positions at which the width of the metal member changes, respectively.

In some possible implementations, referring to FIG. 16, the metal member having a width changing on one side and a notch formed on the other side may also be adopted, and the metal member is bent twice to obtain the pin component 13. The possible implementations of the present application have been described in detail above, and the principles and implementations of the present application have been described herein with specific examples, and the description of the above implementations is only for helping to understand the methods and core ideas of the present application. Meanwhile, those skilled in the art may change the specific embodiments and the scope of application according to the ideas of the present application, and in summary, the contents of the present specification should not be construed as limiting the present application.

## Claims

1. A pin component, comprising:
a tab connection section;
a transition section connected to the tab connection section in a bending manner, wherein a first included angle is formed between the transition section and the tab connection section; and
a pole connection section connected to the transition section in a bending manner, wherein a part of the pole connection section overlaps with the transition section.

2. The pin component according to claim 1, wherein an orthographic projection of the transition section falls completely into an orthographic projection of the pole connection section on a same projection plane perpendicular to a thickness direction of the pole connection section.

3. The pin component according to claim 1, wherein an included angle between an extension direction of the pole connection section and a thickness direction of the tab connection section is in a range of 87° to 90°.

4. The pin component according to claim 3, wherein the extension direction of the pole connection section is perpendicular to the thickness direction of the tab connection section.

5. The pin component according to claim 4, wherein a first crease is formed between the transition section and the pole connection section, and a second included angle is formed between an extension direction of the first crease and the extension direction of the pole connection section.

6. The pin component according to claim 5, wherein the second included angle is in a range of 40° to 50°.

7. The pin component according to any one of claim 1 to claim 6, wherein the pole connection section is located on a side of the transition section facing the tab connection section.

8. The pin component according to claim 7, wherein the pole connection section comprises a first segment and a second segment, the first segment is connected to the transition section in a bending manner and overlaps with the transition section, the second segment is connected to the first segment and is located at a different height position from the first segment along a thickness direction of the pole connection section to define a first avoidance groove, and an opening of the first avoidance groove faces a side of the pole connection section away from the transition section.

9. The pin component according to claim 8, wherein the second segment is provided with a pole mounting hole that penetrates the second segment along the thickness direction of the pole connection section.

10. The pin component according to claim 8 or claim 9, wherein the transition section comprises a first surface away from the first segment, the second segment comprises a second surface away from the first avoidance groove, and the second surface is flush with the first surface.

11. The pin component according to any one of claim 1 to claim 10, wherein the tab connection section comprises a first straight segment, a second straight segment, and a connecting segment, the first straight segment is connected to the transition section in a bending manner, the connecting segment is connected to an end of the first straight segment away from the transition section, and the second straight segment is connected to an end of the connecting segment away from the first straight segment; and
the connecting segment is disposed opposite to the transition section, and the transition section, the first straight segment, and the connecting segment define a second avoidance groove.

12. The pin component according to any one of claim 1 to claim 11, wherein the first included angle is in a range of 87° to 92°.

13. A battery cell, comprising the pin component of any one of claim 1 to claim 12.
